# FASCICULE DE BREVET EUROPEEN

(11) **EP 3 922 511 B1**
(45) Date de publication et mention de la délivrance du brevet: **07.02.2024**
(21) Numéro de dépôt: 21178806.2
(22) Date de dépôt: 10.06.2021
(51) Int. Cl.: B60N 2/07, B60N 2/68, B23K 26/244, B23K 26/26, B23K 26/32, B23K 33/00, B23K 101/00, B23K 101/28

(54) **PROCÉDÉ DE FIXATION PAR SOUDURE D'UN SUPPORT D'INTERFACE SUR UN PROFILÉ DE GLISSIÈRE DE SIÈGE DE VÉHICULE**
VERFAHREN ZUR BEFESTIGUNG EINES SCHNITTSTELLENTRÄGERS AN EINEM GLEITSCHIENENPROFIL EINES FAHRZEUGSITZES DURCH SCHWEISSEN
METHOD FOR ATTACHMENT BY WELDING OF AN INTERFACE SUPPORT ON A PROFILE OF A VEHICLE SEAT RAIL

(30) Priorité: 11.06.2020 FR 2006109
(43) Date de publication de la demande: 15.12.2021
(73) Titulaire: FAURECIA Sièges d'Automobile, 92000 Nanterre (FR)
(72) Inventeur: TOUZET, Bertrand, 31718 POLLHAGEN (DE); GAROTTE, Gérald, 61220 BELLOU EN HOULME (FR)
(74) Mandataire: Plasseraud IP

(56) Documents cités:
- EP-A1- 2 586 648
- WO-A1-2006/040276
- DE-A1-102010 042 285
- FR-A1- 2 880 307
- JP-A- 2011 251 299

## Description

L'invention concerne un procédé de fixation par soudure d'un support d'interface sur un profilé de glissière de siège de véhicule et un profilé de glissière de siège de véhicule susceptible d'être obtenu par un tel procédé.

### Domaine technique

L'invention relève du domaine des sièges de véhicule et notamment des sièges de véhicule automobile. En particulier l'invention concerne le domaine de la fabrication des sièges de véhicule, notamment des glissières prévues pour assurer la fixation du siège au plancher du véhicule, ainsi que le guidage en translation de celui-ci par rapport au plancher du véhicule.

### Technique antérieure

De façon bien connue, une glissière pour siège de véhicule comporte un rail supérieur et un rail inférieur montés coulissant l'un par rapport à l'autre selon une direction longitudinale. Le rail inférieur est généralement prévu pour être fixé au plancher d'un véhicule, tandis que le rail supérieur est prévu pour être relié au châssis du siège.

Le rail supérieur et le rail inférieur sont généralement chacun constitués essentiellement par un profilé métallique découpé et plié selon la configuration souhaitée, le profilé du rail supérieur, dit profilé supérieur, étant configuré pour être reçu et pour coulisser, dans le profilé du rail inférieur, dit profilé inférieur, ou inversement.

De façon connue également, un moyen de liaison, comme par exemple une bielle, peut être prévu pour relier le châssis de siège de véhicule au rail supérieur de la glissière, ledit moyen de liaison étant solidarisé au profilé supérieur, généralement par l'intermédiaire d'un support d'interface fixé sur ledit profilé supérieur.

Un tel support d'interface, généralement réalisé sous forme d'une tôle métallique, découpée et pliée selon la configuration souhaitée, est prévu pour être fixée de façon permanente audit profilé supérieur, et notamment par soudure, ledit profilé supérieur étant également généralement réalisé, au moins partiellement, en matériau métallique.

Une fixation par soudure présente l'avantage d'être simple et rapide à réaliser, et notamment de façon entièrement automatisée par exemple par un robot, et permet une fixation résistante dudit support d'interface au profilé supérieur, apte notamment à résister en cas de choc du véhicule.

Ladite soudure est généralement réalisée avec un faisceau laser émis par une source émettrice qui est mis en position de sorte à venir en contact sur la zone à souder, qui correspond à une zone d'interface entre le support d'interface et le profilé supérieur, pour l'échauffer de sorte à faire fondre le métal de chaque pièce, qui en refroidissant va créer un joint de soudure entre les deux pièces.

Un profilé de glissière présente généralement une section transversale sensiblement en forme de U avec une paroi transversale reliant entre elles deux parois latérales, lesdites parois latérales étant sensiblement parallèles entre elles et ladite paroi transversale étant sensiblement perpendiculaire auxdites parois latérales. Avantageusement, ladite paroi transversale relie les parois latérales par une de leurs extrémités respectives.

Le support d'interface est généralement prévu pour être fixé sur un profilé sur l'une de ses parois latérales, sur la face extérieure de celle-ci. Chaque paroi latérale présente en effet une face extérieure, c'est-à-dire orientée vers l'extérieur du U formé par la section transversale dudit profilé, et une face intérieure, c'est-à-dire orientée vers l'intérieur du U formé par la section transversale dudit profilé.

Selon les procédés de fixation par soudure d'un support d'interface sur un profilé de glissière de siège de véhicule de l'art antérieur, après mise en position du support d'interface avec la face intérieure de l'une de ses parois contre la face extérieure de la paroi latérale du profilé à la position souhaitée, le faisceau laser est mis en position de sorte que celui-ci traverse successivement et dans cet ordre, depuis la source émettrice : la paroi du support d'interface, puis la face extérieure de ladite paroi latérale du profilé, et en demeurant à l'intérieur de la matière de la paroi latérale du profilé.

Le joint de soudure est ensuite réalisé par déplacement dudit faisceau laser par rapport à ladite paroi du support d'interface le long de ladite zone de soudure, le faisceau laser conservant une position telle que celui-ci traverse successivement et dans cet ordre, depuis la source émettrice : la paroi du support d'interface, puis la face extérieure de ladite paroi latérale du profilé, et en demeurant à l'intérieur de la matière de la paroi latérale du profilé.

Le joint de soudure ainsi réalisé entre le support d'interface et le profilé supérieur de la glissière crée cependant une surépaisseur sur la face extérieure de la paroi du support d'interface, qui, selon les constations de l'inventeur, confère en premier lieu un aspect inesthétique au profilé de glissière ainsi obtenu, car le joint de soudure est visible lorsque la glissière comprenant ledit profilé supérieur se trouve dans sa position d'utilisation, fixée au plancher du véhicule et qu'un siège y est relié.

Cette surépaisseur sur la face extérieure de la paroi du support d'interface, peut également former un obstacle entravant la mobilité d'une pièce prévue pour être montée sur le support d'interface, en appui contre la face extérieure de ladite paroi du support d'interface, par exemple un moyen de liaison, comme par exemple une bielle, prévu pour relier le châssis de siège de véhicule au rail supérieur de la glissière.

Le meulage et/ou le polissage de cette surépaisseur afin de la supprimer, augmente le temps de fabrication et donc le coût de revient dudit profilé de rail de glissière, et peut également fragiliser ladite soudure et donc la fixation du support d'interface au profilé supérieur de la glissière, qui ne peut alors plus être en mesure de résister à un choc du véhicule.

Egalement, l'épaisseur de la paroi du support d'interface, en appui contre la face extérieure de la paroi latérale du profilé, est généralement plus importante que l'épaisseur de la paroi latérale du profilé. De ce fait, le faisceau laser devant traverser toute l'épaisseur de la paroi du support d'interface pour atteindre l'intérieur de la matière de la paroi latérale du profilé, la puissance à fournir par la source émettrice pour fournir un tel faisceau laser s'avère particulièrement élevé et consomme une quantité importante d'énergie, ce qui augmente également le coût de revient du profilé de rail de glissière.

Enfin, en raison de la géométrie du profilé supérieur de glissière, cette opération de soudure, pour être réalisée de façon automatisée, doit être effectuée par l'intermédiaire d'un robot, ce qui représente un coût élevé, notamment à cause de la complexité de la mise en oeuvre du robot.
Dans DE102010042285, il est décrit un ensemble qui comporte un rail de guidage pour un montage avec déplacement longitudinal du siège de véhicule, une partie pivotante reliée de manière pivotante au rail de guidage et une goupille d'appui agencée sur le rail de guidage. La goupille d'appui repose sur une section de surface du rail de guidage avec une section de montage et est montée sur la section de surface à travers la section de montage.

### Problème technique

L'invention vient pallier ces inconvénients des procédés de fixation par soudure d'un support d'interface sur un profilé de glissière de siège de véhicule de l'état de la technique, en proposant un procédé de fixation par soudure d'un support d'interface sur un profilé de glissière de siège de véhicule n'entravant pas la mobilité d'un élément monté sur ledit support d'interface.

Un autre but de la présente invention est de proposer un tel procédé de fixation par soudure assurant une fixation résistante du support d'interface au profilé de glissière, et notamment en cas de choc subi par le véhicule recevant la glissière.

Un autre but de la présente invention est de proposer un tel procédé de fixation par soudure permettant d'améliorer l'esthétique du profilé de glissière obtenu.

Un autre but de la présente invention est de proposer un tel procédé de fixation par soudure simple à réaliser, et notamment de façon entièrement automatisée de façon simplifiée, sans employer de robot, rapide et avec un coût de revient réduit.

Il est proposé un procédé de fixation par soudure d'un support d'interface sur un profilé de rail de glissière de siège de véhicule, comprenant les étapes :
a) fourniture d'un support d'interface présentant au moins une paroi avec une face intérieure, et d'un profilé de rail de glissière présentant une section transversale sensiblement en forme de U avec une paroi transversale reliant entre elles deux parois latérales, lesdites parois latérales étant sensiblement parallèles entre elles et ladite paroi transversale étant sensiblement perpendiculaire auxdites parois latérales, la paroi transversale et chaque paroi latérale présentant une face intérieure et une face extérieure,
b) mise en position du support d'interface avec la face intérieure de sa au moins une paroi contre la face extérieure d'une paroi du profilé,
c) réalisation d'un joint de soudure entre la paroi du support d'interface et la paroi du profilé par déplacement d'un faisceau laser, émis depuis une source émettrice, par rapport à la paroi du profilé, en maintenant le faisceau laser dans une position telle que celui-ci traverse successivement et dans cet ordre, depuis la source émettrice : la face intérieure de ladite paroi du profilé, puis la face extérieure de ladite paroi du profilé, puis la face intérieure de la paroi du support d'interface, et en demeurant à l'intérieur de la matière de la paroi du support d'interface.

Selon des caractéristiques optionnelles de l'invention, prises seules ou en combinaison :
- l'épaisseur de la paroi du support d'interface est supérieure à l'épaisseur de la paroi du profilé ;
- le profilé est un profilé de rail supérieur de glissière, et le support d'interface présente une première paroi d'arrêt, la face intérieure de ladite première paroi d'arrêt étant prévue pour venir en contact contre la face extérieure d'une paroi latérale du profilé lors de l'étape (b) du procédé, un joint de soudure étant réalisé à l'issue de l'étape d) entre ladite première paroi d'arrêt du support d'interface et la paroi latérale du profilé ;
- le support d'interface présente une deuxième paroi d'arrêt, la face intérieure de ladite deuxième paroi d'arrêt étant prévue pour venir en contact avec la face extérieure de la paroi transversale du profilé lors de l'étape (b) du procédé, un joint de soudure étant réalisé à l'issue de l'étape c) entre ladite deuxième paroi d'arrêt du support d'interface et la paroi transversale du profilé ;
- le procédé comporte en outre, suite à l'étape b), et préalablement à l'étape c), une étape b') de mise en position du faisceau laser émis depuis la source émettrice, de sorte que celui-ci traverse successivement et dans cet ordre, depuis la source émettrice : la face intérieure de ladite paroi du profilé, puis la face extérieure de ladite paroi du profilé, puis la face intérieure de la paroi du support d'interface, et en demeurant à l'intérieur de la matière de la paroi du support d'interface,
- le support d'interface est configuré pour recevoir un moyen de liaison d'un châssis de siège de véhicule au profilé.

L'invention concerne également un profilé de glissière de siège de véhicule présentant une section transversale sensiblement en forme de U avec une paroi transversale reliant entre elles deux parois latérales, lesdites parois latérales étant sensiblement parallèles entre elles et ladite paroi transversale étant sensiblement perpendiculaire auxdites parois latérales, la paroi transversale et chaque paroi latérale présentant une face intérieure et une face extérieure, ledit profilé de glissière comprenant un support d'interface fixé par soudure sur la face extérieure d'une de ses parois, ledit profilé étant susceptible d'être obtenu par le procédé selon l'un des modes de réalisation de l'invention.

Les caractéristiques exposées dans les paragraphes suivants peuvent, optionnellement, être mises en oeuvre. Elles peuvent être mises en oeuvre indépendamment les unes des autres ou en combinaison les unes avec les autres.

### Brève description des dessins

D'autres caractéristiques, détails et avantages de l'invention apparaîtront à la lecture de la description détaillée ci-après, et à l'analyse des dessins annexés, sur lesquels :
**Fig. 1A**

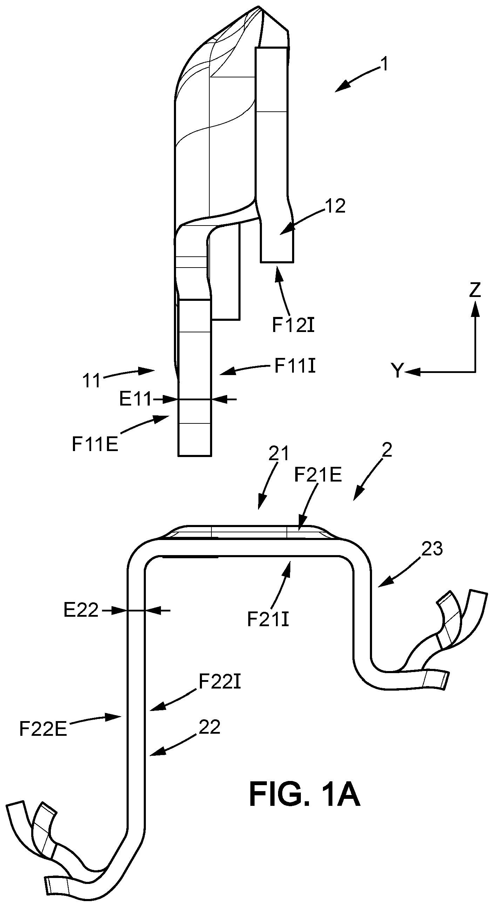

   [Fig. 1A] représente de façon schématique selon une vue de face l'étape a) du procédé selon un mode de réalisation conforme à l'invention.
**Fig. 1B**

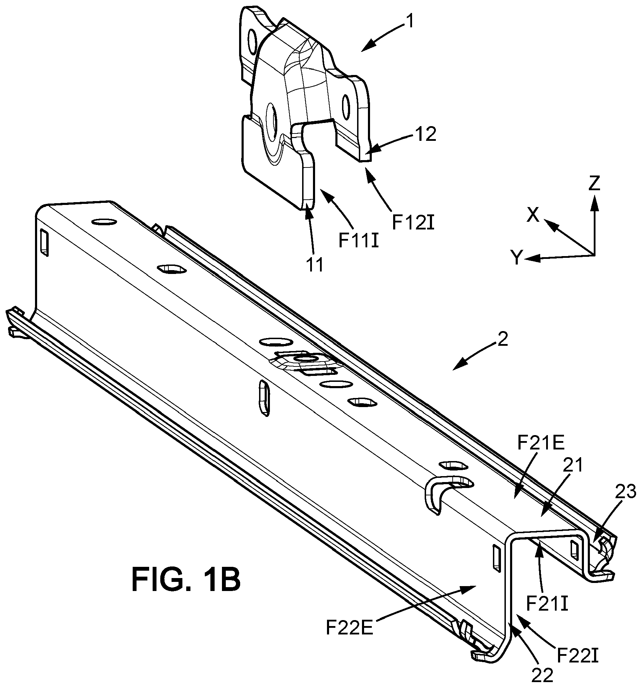

   [Fig. 1B] représente de façon schématique selon une vue en perspective l'étape a) de la figure 1A.
**Fig. 2A**

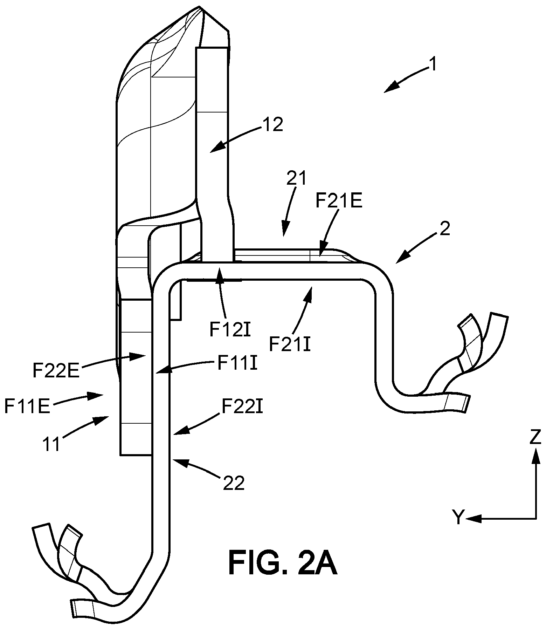

   [Fig. 2A] représente de façon schématique selon une vue de face l'étape b) du procédé selon un mode de réalisation conforme à l'invention.
**Fig. 2B**

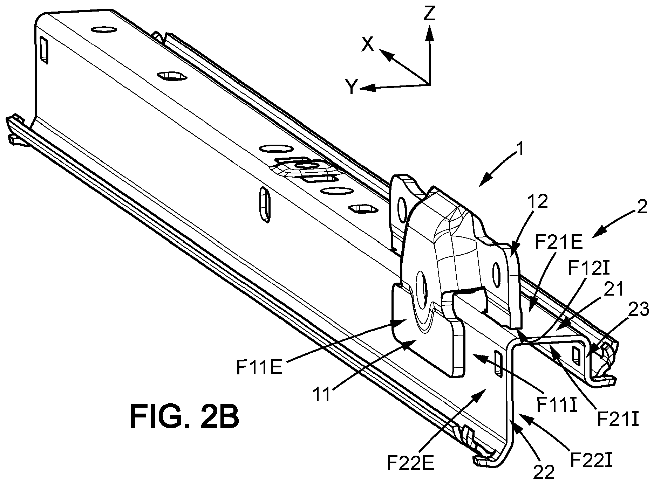

   [Fig. 2B] représente de façon schématique selon une vue en perspective l'étape b) de la figure 2A.
**Fig. 3**

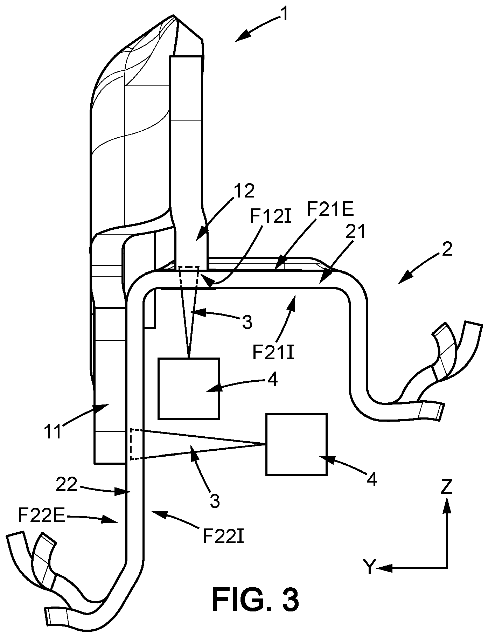

   [Fig. 3] représente de façon schématique selon une vue de face l'étape b') du procédé selon un mode de réalisation conforme à l'invention.
**Fig. 4**

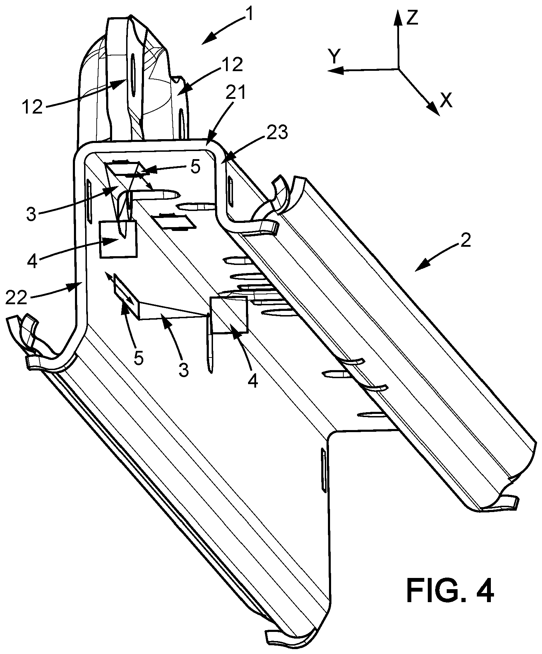

   [Fig. 4] représente de façon schématique selon une vue en perspective l'étape c) du procédé selon un mode de réalisation conforme à l'invention.
**Fig. 5A**

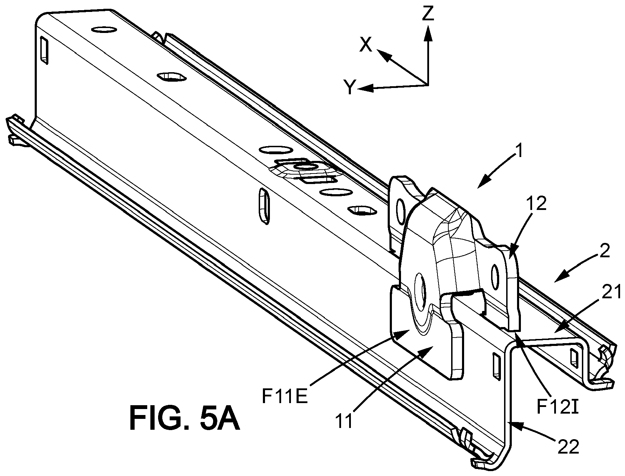

   [Fig. 5A] représente selon une vue en perspective un profilé comprenant un support d'interface fixé par soudure, susceptible d'être obtenu avec un procédé selon un mode de réalisation conforme à l'invention.
**Fig. 5B**

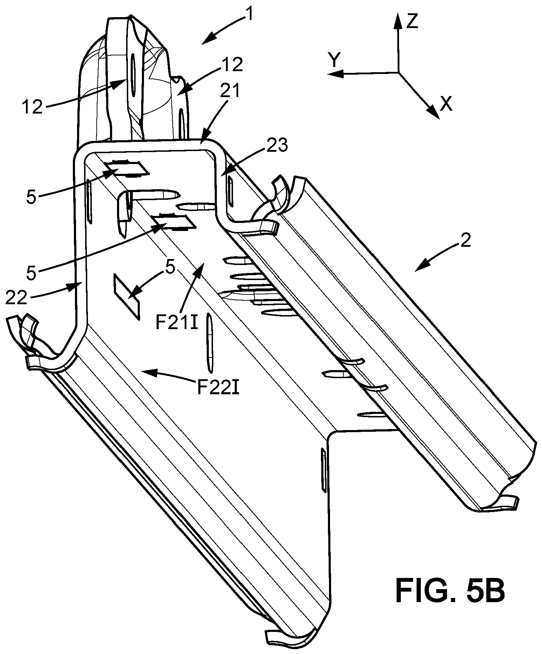

   [Fig. 5B] représente selon une vue en perspective le profilé de la figure 5A.
**Fig. 6**

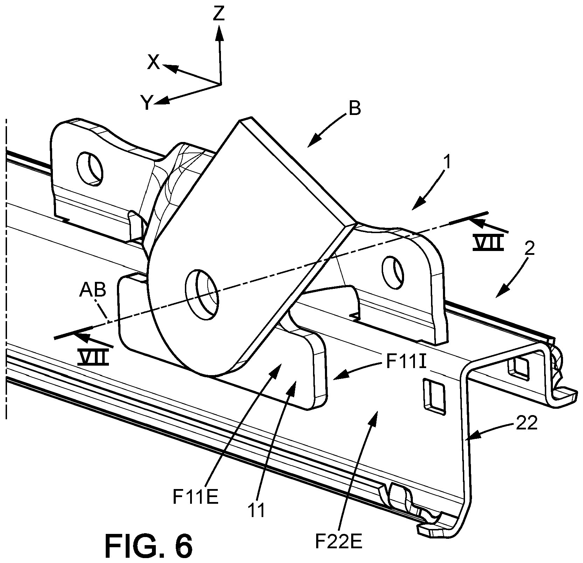

   [Fig. 6] représente selon une vue en perspective le profilé de la figure 5A, avec une bielle, comme moyen de liaison d'un châssis de siège de véhicule au profilé, montée pivotante sur le support d'interface.
**Fig. 7**

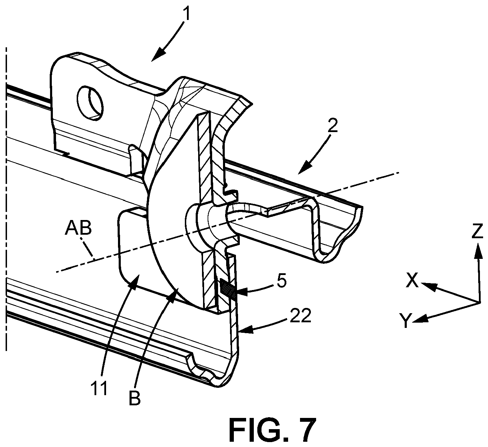

   [Fig. 7] représente une vue en coupe selon la ligne VII-VII de la figure 6, le profilé de la figure 6.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

De même, on entend par sensiblement parallèle ou perpendiculaire, une orientation par rapport à un élément donné avec un angle inférieur à 30°, qui peut avantageusement être nul, selon une droite parallèle, respectivement perpendiculaire à cet élément.

L'invention concerne un procédé de fixation par soudure d'un support d'interface 1 sur un profilé 2 de rail de glissière de siège de véhicule, comprenant les étapes :
a) fourniture d'un support d'interface 1 présentant au moins une paroi 11, 12 avec une face intérieure F11I, F12I et d'un profilé 2 de rail de glissière présentant une section transversale sensiblement en forme de U avec une paroi transversale 21 reliant entre elles deux parois latérales 22, 23, lesdites parois latérales 22, 23 étant sensiblement parallèles entre elles et ladite paroi transversale 21 étant sensiblement perpendiculaire auxdites parois latérales 22, 23, la paroi transversale 21 et chaque paroi latérale 22, 23 présentant une face intérieure F21I, F22I et une face extérieure F21E, F22E,
b) mise en position du support d'interface 1 avec la face intérieure F11I, F12I de sa au moins une paroi 11, 12 contre la face extérieure F21E, F22E d'une paroi 21, 22 du profilé 2,
c) réalisation d'un joint de soudure 5 entre le support d'interface 1 et la paroi 21, 22 du profilé 2 par déplacement d'un faisceau laser 3, émis depuis une source émettrice 4, par rapport à la paroi 21, 22 du profilé 2, en maintenant le faisceau laser 3 dans une position telle que celui-ci traverse successivement et dans cet ordre : la face intérieure F21I, F22I de ladite paroi 21, 22 du profilé 2, puis la face extérieure F21E, F22E de ladite paroi 22 du profilé, puis la face intérieure F11I, F12I de la paroi 11, 12 du support d'interface 1, et en demeurant à l'intérieur de la matière de la paroi 11, 12 du support d'interface 1.

Les différentes étapes du procédé selon l'invention sont représentées de façon schématique sur les exemples de réalisation des figures 1A à 4 :
- l'étape a) de fourniture d'un support d'interface 1 et d'un profilé 2 de rail de glissière est représentée de façon schématique sur les exemples de réalisation des figures 1A et 1B ;
- l'étape b) de mise en position du support d'interface 1 avec la face intérieure F11I, F12I de sa au moins une paroi 11, 12 contre la face extérieure F21E, F22E d'au moins une paroi 21, 22 du profilé 2 est représentée de façon schématique sur les exemples de réalisation des figures 2A et 2B ;
- l'étape c) de réalisation d'un joint de soudure 5 entre la paroi 11, 12 du support d'interface 1 et la paroi 21, 22 du profilé 2 par déplacement du faisceau laser 3 est représenté de façon schématique sur l'exemple de réalisation de la figure 4.

Ainsi, et comme visible sur les exemples de réalisation des figures 5A et 5B, qui représentent le profilé 2 auquel est fixé le support d'interface 1 à l'issue de la mise en oeuvre du procédé selon l'invention, le joint de soudure 5 réalisé assurant la liaison entre le support d'interface 1 et le profilé 2 s'étend uniquement en saillie vers l'intérieur du U de la section transversale du profilé 2, depuis la face intérieure F21I, F22I de la paroi 21, 22 du profilé 2.

Comme visible sur les exemples de réalisation des figures 1A et 1B, la paroi 11, 12 du support d'interface 1 présente une face intérieure F11I, F12I, c'est-à-dire prévue pour être orientée également vers l'intérieur du U de la section transversale du profilé 2, après fixation du support d'interface 1 au profilé 2, et destinée à se trouver en appui contre la face extérieure F22E de la paroi 22 du profilé 2. La paroi 11 peut également présenter une face extérieure F11E, c'est-à-dire prévue pour être orientée vers l'extérieur du U de la section transversale du profilé 2, après fixation du support d'interface 1 au profilé 2, et destinée à se trouver en appui contre la face extérieure F22E de la paroi 22 du profilé 2 .

Le joint de soudure 5 réalisé avec le procédé selon l'invention s'étend essentiellement dans la matière de la paroi 21, 22 du profilé 2, entre la face intérieure F21I, F22I et la face extérieure F21E, F22E de la paroi 21, 22, ainsi que partiellement dans la matière de la paroi 11, 12 du support d'interface 1, en saillie depuis la face intérieure F11I, F12I de la paroi 11, 12, mais sans s'étendre vers l'extérieur de la paroi 11, 12 du support d'interface 1, et notamment en saillie depuis sa face extérieure F11E.

Au contraire, et comme visible sur les exemples de réalisation des figures 5A et 5B, ce joint de soudure 5 s'étend en saillie, depuis la face intérieure F11I, F12I de la paroi 11, 12 du support d'interface 1, vers l'intérieur du U de la section transversale du profilé 2, et donc également en saillie vers l'intérieur du U de la section transversale du profilé 2 depuis la face intérieure F21I, F22I de la paroi 21, 22 du profilé 2.

Le joint de soudure 5 ne risque donc pas de constituer un obstacle pour un élément reçu sur le support d'interface 1, par exemple en appui contre la face extérieure F11E de la paroi 11 du support d'interface 1, tel qu'un moyen de liaison d'un châssis de siège de véhicule au profilé, tel qu'une bielle B, comme visible sur l'exemple de réalisation de la figure 6.

Egalement, ce joint de soudure 5 n'est pas visible lorsque le profilé est dans sa position d'utilisation, c'est-à-dire lorsque la glissière le comprenant est installée sur un plancher de véhicule et qu'un siège y est relié, et comme visible sur les exemples de réalisation de la figure 5A et de la figure 6, ce qui améliore l'esthétique du profilé et donc de la glissière ainsi obtenue.

Au contraire un joint de soudure obtenu avec un procédé de fixation par soudure de l'art antérieur, tel que décrit précédemment, s'étend en saillie depuis la face extérieure de la paroi du support d'interface vers l'extérieur du U de la section transversale du profilé, et risque donc de constituer un obstacle pour un élément reçu en appui sur la face extérieure de la paroi du support d'interface.

Egalement, ce joint de soudure obtenu avec un procédé de fixation par soudure de l'art antérieur sera visible lorsque le profilé est dans sa position d'utilisation, c'est-à-dire lorsque la glissière le comprenant est installée sur un plancher de véhicule et qu'un siège y est relié.

Selon les constations de l'inventeur, ce procédé peut également être facilement mis en oeuvre de façon automatisée par une machine adéquat, et sans utiliser un robot.

La trajectoire de déplacement du faisceau laser 3 par rapport à la paroi 21, 22 du profilé 2 au cours de l'étape c) du procédé selon l'invention, dépend directement la forme du joint de soudure 5.

Ce déplacement du faisceau laser 3 par rapport à la paroi 21, 22 du profilé 2 au cours de l'étape c) du procédé peut ainsi par exemple comprendre au moins un mouvement de translation du faisceau laser 3 par rapport à la paroi 21, 22 du profilé 2, par exemple, comme visible selon l'exemple de réalisation de la figure 4, selon une direction longitudinale X du profilé 2.

Alternativement ou en complément, le déplacement du faisceau laser 3 par rapport à la paroi 21, 22 du profilé 2 au cours de l'étape c) du procédé peut comprendre un mouvement de translation selon une direction transversale Y du profilé 2 et/ou un mouvement de translation selon une direction verticale Z du profilé 2.

Selon un mode de réalisation, l'épaisseur E11 de la paroi du support d'interface 1 est supérieure à l'épaisseur E22 de la paroi 22 du profilé 2, comme visible par exemple sur l'exemple de réalisation de la figure 1A.

Grâce à cette disposition avantageuse de l'invention, comme au cours de l'étape c), pour réaliser le joint de soudure 5, le faisceau laser 3 demeure à l'intérieur de la matière de la paroi 11, 12 du support d'interface 1, sans la traverser, en traversant simplement la paroi 21, 22 du profilé 2 de part et d'autre, c'est-à-dire de sa face intérieure F21I, F22I à sa face extérieure F21E, F22E, et que l'épaisseur E11 de la paroi du support d'interface 1 est supérieure à l'épaisseur E22 de la paroi 22 du profilé 2, la puissance nécessaire à fournir par la source émettrice 4 du faisceau laser 3 est moindre par rapport aux procédés de l'état de la technique dans lequel le faisceau laser doit traverser la matière de la paroi du support d'interface et une partie de la paroi du profilé, et donc une plus grande épaisseur de matière.

à La source émettrice 4 du faisceau laser 3 requiert donc une quantité d'énergie moins importante pour obtenir la soudure du support d'interface 1 au profilé 2 par rapport aux procédés de l'état de la technique, ce qui permet de diminuer le coût de revient du procédé.

Selon un mode de réalisation, le procédé comporte en outre, suite à l'étape b), et préalablement à l'étape c), une étape b') de mise en position du faisceau laser 3 émis depuis la source émettrice 4, de sorte que celui-ci traverse successivement et dans cet ordre, depuis la source émettrice 4 : la face intérieure F21I, F22I de ladite paroi 21, 22 du profilé 2, puis la face extérieure F21E, F22E de ladite paroi 21, 22 du profilé 2, puis la face intérieure F11I, F12I paroi 11, 12 du support d'interface 1, et en demeurant à l'intérieur de la matière de la paroi 11, 12 du support d'interface 1.

Cette étape b') du procédé de mise en position du faisceau laser 3 émis depuis la source émettrice 4 est représentée de façon schématique sur l'exemple de réalisation de la figure 3.

Ainsi, et de la même manière qu'au cours de l'étape c) du procédé selon l'invention, au cours de l'étape b'), le faisceau laser 3 demeure à l'intérieur de la matière de la paroi 11, 12 du support d'interface 1, sans la traverser, en traversant simplement la paroi 21, 22 du profilé 2 de part et d'autre, c'est-à-dire de sa face intérieure F21I, F22I à sa face extérieure F21E, F22E. La puissance fournie par la source émettrice 4 du faisceau laser 3 pour mettre en oeuvre le procédé selon l'invention et réaliser un joint de soudure 5 est donc moindre par rapport aux procédés de l'état de la technique dans lequel le faisceau laser doit traverser la matière de la paroi du support d'interface et une partie de la paroi du profilé, et donc une plus grande épaisseur de matière. C'est particulièrement le cas lorsque l'épaisseur E11 de la paroi du support d'interface 1 est supérieure à l'épaisseur E22 de la paroi 22 du profilé 2, comme visible sur l'exemple de réalisation de la figure 1A.

Selon un mode de réalisation, le profilé 2 est un profilé de rail supérieur de glissière, et dans lequel le support d'interface 1 présente une première paroi d'arrêt 11, la face intérieure F11I étant prévue pour venir en contact avec la face extérieure F22E d'une paroi latérale 22 du profilé 2 lors de l'étape (b) du procédé, un joint de soudure 5 étant réalisé à l'issue de l'étape d) entre ladite première paroi d'arrêt 11 du support d'interface 1 et la paroi latérale 22 du profilé 2.

Selon un mode de réalisation, le support d'interface 1 présente une deuxième paroi d'arrêt 12, la face intérieure F12I de ladite deuxième paroi d'arrêt 12 étant prévue pour venir en contact avec la face extérieure F21E de la paroi transversale 21 du profilé 2 lors de l'étape b) du procédé, un joint de soudure 5 étant réalisé à l'issue de l'étape d) entre ladite deuxième paroi d'arrêt 12 du support d'interface 1 et la paroi transversale 21 du profilé 2.

Comme visible sur les exemples de réalisation des figures 4 et 5B, le joint de soudure 5 entre la deuxième paroi d'arrêt 12 du support d'interface 1 et la paroi transversale 21 du profilé 2 s'étend en saillie depuis la face intérieure F12I de la deuxième paroi d'arrêt 12 du support d'interface 1 vers l'intérieur du U de la section transversale du profilé 2, et également en saillie depuis la face intérieure F21I de la paroi transversale 21 du profilé 2, vers l'intérieur du U de la section transversale du profilé 2.

Le fait de prévoir une fixation du support d'interface 1 sur le profilé 2 via au moins deux joints de soudure 5, et sur deux parois 21, 22 du profilé 2, sensiblement perpendiculaires entre elles, via lesdites deux parois d'arrêt 11, 12, permet d'assurer une fixation plus résistante du support d'interface 1 sur le profilé 2.

Comme visible sur les exemples de réalisation des figures 4 et 5B, le support d'interface 1 peut présenter deux deuxièmes parois d'arrêt 12, sensiblement identiques et positionnées dans le prolongement l'une de l'autre, chacune prévue pour être solidarisée via un joint de soudure 5, distinct ou commun, à la paroi transversale 21 du profilé 2.

Selon un mode de réalisation, le support d'interface 1 est configuré pour recevoir un moyen de liaison B d'un châssis de siège de véhicule au profilé 2.

Comme visible sur l'exemple de réalisation de la figure 7, ledit support d'interface 1 et ledit moyen de liaison B peuvent avantageusement être configurés de sorte que le moyen de liaison B soit fixé sur ledit support d'interface 1 dans le prolongement de la face extérieure F11E de la première paroi d'arrêt 11 du support d'interface 1 selon la direction transversale Y du profilé 2, et notamment en appui, en particulier en appui-plan, contre ladite face extérieure F11E de la première paroi d'arrêt 11 du support d'interface 1. Le joint de soudure 5 joignant ladite première paroi d'arrêt 11 du support d'interface 1 à la paroi latérale 22 du profilé 2 ne générant aucune surépaisseur sur la face extérieure F11E de ladite première paroi d'arrêt 11, en saillie vers l'extérieur depuis ladite face extérieure F11E, sans risquer d'entraver le mouvement du moyen de liaison B par rapport au support d'interface 1.

Avantageusement, le moyen de liaison B peut ainsi être prévu pour être fixé dans le prolongement du joint de soudure 5 joignant ladite première paroi d'arrêt 11 du support d'interface 1 à la paroi latérale 22 du profilé 2 selon la direction transversale Y du profilé 2.

Cela permet avantageusement de réduire l'encombrement du support d'interface 1, notamment selon la direction longitudinale X du profilé 2, en ce qu'il n'est avantageusement pas nécessaire de décaler le moyen de liaison B par rapport au joint de soudure 5 selon la direction longitudinale X du profilé 2, et sans nuire à la résistance de la fixation du support d'interface 1 au profilé 2.

Comme visible sur l'exemple de réalisation de la figure 6, le moyen de liaison B peut par exemple être une bielle B (représentée partiellement sur la figure 6), articulée pivotante au support d'interface 1 selon un axe AB, et se trouvant dans le prolongement de la face extérieure F11E de la première paroi d'arrêt 11 du support d'interface 1 selon la direction transversale Y du profilé 2, et notamment en appui, en particulier en appui-plan, contre la face extérieure F11E de la première paroi d'arrêt 11 du support d'interface. Le joint de soudure 5 joignant ladite première paroi d'arrêt 11 du support d'interface 1 à la paroi latérale 22 du profilé 2 ne générant aucune surépaisseur sur la face extérieure F11E de ladite première paroi d'arrêt 11, en saillie vers l'extérieur depuis ladite face extérieure F11E, le mouvement de pivotement de la bielle B autour de l'axe AB ne risque donc pas d'être entravé.

Avantageusement, et comme visible plus particulièrement sur l'exemple de réalisation de la figure 7, ladite bielle B peut être prévue pour être positionnée, au moins partiellement, dans le prolongement du joint de soudure 5 selon la direction transversale Y du profilé 2, ce qui permet de réduire l'encombrement du support d'interface 1, notamment selon la direction longitudinale X du profilé 2, en ce qu'il n'est avantageusement pas nécessaire de décaler la bielle B, et notamment son axe de pivotement AB, par rapport au joint de soudure 5 selon la direction longitudinale X du profilé 2, et sans nuire à la résistance de la fixation du support d'interface 1 au profilé 2.

L'axe AB de pivotement de la bielle B par rapport au support d'interface 1 peut être prévu pour s'étendre sensiblement selon la direction transversale Y du profilé 2.

Selon un mode de réalisation, le procédé comprend en outre une étape d) de fixation sur le support d'interface 1 du moyen de liaison B d'un châssis de siège de véhicule au profilé 2.

Avantageusement, ledit moyen de liaison B peut être fixé au cours de d) sur le support d'interface 1 dans le prolongement de la face extérieure F11E de la première paroi d'arrêt 11 selon la direction transversale Y du profilé 2, et notamment en appui, en particulier en appui-plan, contre ladite face extérieure F11E de la première paroi d'arrêt 11 du support d'interface 1.

Selon un mode de réalisation, ledit moyen de liaison B est fixé au cours de d) sur le support d'interface 1 dans le prolongement du joint de soudure 5 joignant ladite première paroi d'arrêt 11 du support d'interface 1 à la paroi latérale 22 du profilé 2 selon la direction transversale Y du profilé 2.

Selon un mode de réalisation, le moyen de liaison B du châssis de siège au profilé 2 est une bielle B, articulée pivotante au support d'interface 1 selon un axe AB. L'axe AB de pivotement de la bielle B par rapport au support d'interface 1 peut s'étendre sensiblement selon la direction transversale Y du profilé 2.

L'invention concerne encore un profilé 2 de glissière de siège de véhicule présentant une section transversale sensiblement en forme de U avec une paroi transversale 21 reliant entre elles deux parois latérales 22, 23, lesdites parois latérales 22, 23 étant sensiblement parallèles entre elles et ladite paroi transversale 21 étant sensiblement perpendiculaire auxdites parois latérales 22, 23, la paroi transversale 21 et chaque paroi latérale 22, 23 présentant une face intérieure F21I, F22I et une face extérieure F21E, F22E ledit profilé de glissière 2 comprenant un support d'interface 1 fixé par soudure sur la face extérieure F21E, F22E d'une de ses parois 22.

Selon l'invention, ledit profilé 2 est susceptible d'être obtenu par le procédé selon l'un des modes de réalisation décrits ci-dessus.

L'ensemble des dispositions décrites précédemment concernant le profilé 2 muni d'un support d'interface 1 fixé par au moins un joint de soudure 5 obtenu avec le procédé tel que décrit précédemment s'appliquent au profilé 2 selon l'invention.

Naturellement, d'autres modes de réalisation auraient pu être envisagés par l'Homme du métier sans pour autant sortir du cadre de l'invention définie par les revendications ci-après.

### Liste des signes de référence

1. Support d'interface
11. Première paroi d'arrêt
F11I. Face intérieure
F11E. Face extérieure
12. Deuxième paroi d'arrêt
F12I. Face intérieure
2. Profilé
21. Paroi transversale
F21I. Face intérieure
F21E. Face extérieure
22, 23. Paroi latérale
F22I. Face intérieure
F22E. Face extérieure
3. Faisceau laser
4. Source émettrice
B. Bielle
AB. Axe
X. Direction longitudinale
Y. Direction transversale
Z. Direction verticale

## Revendications

1. Procédé de fixation par soudure d'un support d'interface (1) sur un profilé (2) de rail de glissière de siège de véhicule, comprenant les étapes :
a) fourniture d'un support d'interface (1) présentant au moins une paroi (11, 12) avec une face intérieure (F11I, F12I), et d'un profilé (2) de rail de glissière présentant une section transversale sensiblement en forme de U avec une paroi transversale (21) reliant entre elles deux parois latérales (22, 23), lesdites parois latérales (22, 23) étant sensiblement parallèles entre elles et ladite paroi transversale (21) étant sensiblement perpendiculaire auxdites parois latérales (22, 23), la paroi transversale (21) et chaque paroi latérale (22, 23) présentant une face intérieure (F21I, F22I) et une face extérieure (F21E, F22E),
b) mise en position du support d'interface (1) avec la face intérieure (F11I, F12I) de sa au moins une paroi (11, 12) contre la face extérieure (F21E, F22E) d'une paroi (21, 22) du profilé (2),
c) réalisation d'un joint de soudure (5) entre la paroi (11, 12) du support d'interface (1) et la paroi (21, 22) du profilé (2) par déplacement d'un faisceau laser (3), émis depuis une source émettrice (4), par rapport à la paroi (21, 22) du profilé (2), en maintenant le faisceau laser (3) dans une position telle que celui-ci traverse successivement et dans cet ordre, depuis la source émettrice (4) : la face intérieure (F21I, F22I) de ladite paroi (21, 22) du profilé (2), puis la face extérieure (F21E, F22E) de ladite paroi (21, 22) du profilé (2), puis la face intérieure (F11I, F12I) de la paroi (11, 12) du support d'interface (1), et en demeurant à l'intérieur de la matière de la paroi (11, 12) du support d'interface (1).

2. Procédé selon la revendication 1, dans lequel l'épaisseur (E11) de la paroi du support d'interface (1) est supérieure à l'épaisseur (E22) de la paroi (22) du profilé (2).

3. Procédé selon la revendication 1 ou 2, dans lequel le profilé (2) est un profilé de rail supérieur de glissière, et le support d'interface (1) présente une première paroi d'arrêt (11), la face intérieure (F11I) de ladite première paroi d'arrêt (11) étant prévue pour venir en contact contre la face extérieure (F22E) d'une paroi latérale (22) du profilé (2) lors de l'étape b) du procédé, un joint de soudure (5) étant réalisé à l'issue de l'étape c) entre ladite première paroi d'arrêt (11) du support d'interface (1) et la paroi latérale (22) du profilé (2).

4. Procédé selon la revendication 3, dans lequel le support d'interface (1) présente une deuxième paroi d'arrêt (12), la face intérieure (F12I) de ladite deuxième paroi d'arrêt (12) étant prévue pour venir en contact avec la face extérieure (F21E) de la paroi transversale (21) du profilé lors de l'étape b) du procédé, un joint de soudure (5) étant réalisé à l'issue de l'étape c) entre ladite deuxième paroi d'arrêt (12) du support d'interface (1) et la paroi transversale (21) du profilé (2).

5. Procédé selon l'une des revendications 1 à 4, dans lequel le procédé comporte en outre, suite à l'étape b), et préalablement à l'étape c), une étape b') de mise en position du faisceau laser (3) émis depuis la source émettrice (4), de sorte que celui-ci traverse successivement et dans cet ordre, depuis la source émettrice (4) : la face intérieure (F21I, F22I) de ladite paroi (21, 22) du profilé (2), puis la face extérieure (F21E, F22E) de ladite paroi (21, 22) du profilé (2), puis la face intérieure (F11I, F12I) de la paroi (11, 12) du support d'interface (1), et en demeurant à l'intérieur de la matière de la paroi (11) du support d'interface (1).

6. Procédé selon l'une des revendications 1 à 5, dans lequel le support d'interface (1) est configuré pour recevoir un moyen de liaison (B) d'un châssis de siège de véhicule au profilé (2).

7. Procédé selon la revendication 6, comprenant en outre une étape d) de fixation sur le support d'interface (1) du moyen de liaison (B) d'un châssis de siège de véhicule au profilé (2).

8. Procédé selon la revendication 7, pris en combinaison avec la revendication 3, seule ou en combinaison avec la revendication 4, dans lequel ledit moyen de liaison (B) est fixé au cours de d) sur le support d'interface (1) dans le prolongement de la face extérieure (F11E) de la première paroi d'arrêt (11) selon la direction transversale (Y) du profilé (2), et notamment en appui, en particulier en appui-plan, contre ladite face extérieure (F11E) de la première paroi d'arrêt (11) du support d'interface (1).

9. Procédé selon la revendication 8, dans lequel ledit moyen de liaison (B) est fixé au cours de d) sur le support d'interface (1) dans le prolongement du joint de soudure (5) joignant ladite première paroi d'arrêt (11) du support d'interface (1) à la paroi latérale (22) du profilé (2) selon la direction transversale (Y) du profilé (2).

10. Procédé selon l'une des revendications 6 à 9, dans lequel le moyen de liaison (B) du châssis de siège au profilé (2) est une bielle (B), articulée pivotante au support d'interface (1) selon un axe (AB).

11. Profilé (2) de glissière de siège de véhicule présentant une section transversale sensiblement en forme de U avec une paroi transversale (21) reliant entre elles deux parois latérales (22, 23), lesdites parois latérales (22, 23) étant sensiblement parallèles entre elles et ladite paroi transversale (21) étant sensiblement perpendiculaire auxdites parois latérales (22, 23), la paroi transversale (21) et chaque paroi latérale (22, 23) présentant une face intérieure (F22I) et une face extérieure (F22E), ledit profilé (2) de glissière comprenant un support d'interface (1) fixé par soudure sur la face extérieure (F21E, F22E) d'une de ses parois (21, 22),
ledit profilé (2) étant susceptible d'être obtenu par le procédé selon l'une des revendications 1 à 10.

## Patentansprüche

1. Verfahren zur Befestigung eines Schnittstellenträgers (1) an einem Profil (2) einer Gleitschiene eines Fahrzeugsitzes durch Schweißen, das die folgenden Schritte umfasst:
a) Bereitstellen eines Schnittstellenträgers (1), der wenigstens eine Wand (11, 12) mit einer Innenseite (F11I, F12I) aufweist, und eines Gleitschienenprofils (2), das einen im Wesentlichen U-förmigen Querschnitt mit einer Querwand aufweist (21), die zwei Seitenwände (22, 23) miteinander verbindet, wobei die Seitenwände (22, 23) im Wesentlichen parallel zueinander sind und die Querwand (21) im Wesentlichen senkrecht zu den Seitenwänden (22, 23) ist, wobei die Querwand (21) und jede Seitenwand (22, 23) eine Innenseite (F21I, F22I) und eine Außenseite (F21E, F22E) aufweisen,
b) Positionieren des Schnittstellenträgers (1) mit der Innenseite (F11I, F12I) seiner wenigstens einen Wand (11, 12) gegen die Außenseite (F21E, F22E) einer Wand (21, 22) des Profils (2),
c) Herstellen einer Schweißnaht (5) zwischen der Wand (11, 12) des Schnittstellenträgers (1) und der Wand (21, 22) des Profils (2) durch Verschieben eines Laserstrahls (3), der von einer Sendequelle (4) ausgesendet wird, in Bezug auf die Wand (21, 22) des Profils (2), wobei der Laserstrahl (3) derart in einer Position gehalten wird, dass er nacheinander und in der folgenden Reihenfolge von der Sendequelle (4) aus durchläuft: die Innenseite (F21I, F22I) der Wand (21, 22) des Profils (2), dann die Außenseite (F21E, F22E) der Wand (21, 22) des Profils (2), dann die Innenseite (F11I, F12I) der Wand (11, 12) des Schnittstellenträgers (1), und wobei er im Inneren des Materials der Wand (11, 12) des Schnittstellenträgers (1) verbleibt.

2. Verfahren nach Anspruch 1, wobei die Dicke (E11) der Wand des Schnittstellenträgers (1) größer ist als die Dicke (E22) der Wand (22) des Profils (2).

3. Verfahren nach Anspruch 1 oder 2, wobei das Profil (2) ein Oberschienenprofil einer Gleitschiene ist und der Schnittstellenträger (1) eine erste Anschlagwand (11) aufweist, wobei die Innenseite (F11I) der ersten Anschlagwand (11) dazu vorgesehen ist, während Schritt b) des Verfahrens mit der Außenseite (F22E) einer Seitenwand (22) des Profils (2) in Kontakt zu kommen, wobei am Ende von Schritt c) eine Schweißnaht (5) zwischen der ersten Anschlagwand (11) des Schnittstellenträgers (1) und der Seitenwand (22) des Profils (2) hergestellt wird.

4. Verfahren nach Anspruch 3, wobei der Schnittstellenträger (1) eine zweite Anschlagwand (12) aufweist, wobei die Innenseite (F12I) der zweiten Anschlagwand (12) dazu vorgesehen ist, in Schritt b) des Verfahrens mit der Außenseite (F21E) der Querwand (21) des Profils in Kontakt zu kommen, wobei am Ende von Schritt c) eine Schweißnaht (5) zwischen der zweiten Anschlagwand (12) des Schnittstellenträgers (1) und der Querwand (21) des Profils (2) hergestellt wird.

5. Verfahren nach einem der Ansprüche 1 bis 4, wobei das Verfahren ferner im Anschluss an Schritt b) und vor Schritt c) einen Schritt b') zur Positionierung des von der Sendequelle (4) ausgesendeten Laserstrahls (3) umfasst, so dass dieser nacheinander und in der folgenden Reihenfolge von der Sendequelle (4) aus durchläuft: die Innenseite (F21I, F22I) der Wand (21, 22) des Profils (2), dann die Außenseite (F21E, F22E) der Wand (21, 22) des Profils (2), dann die Innenseite (F11I, F12I) der Wand (11, 12) des Schnittstellenträgers (1), und wobei er im Inneren des Materials der Wand (11) des Schnittstellenträgers (1) verbleibt.

6. Verfahren nach einem der Ansprüche 1 bis 5, wobei der Schnittstellenträger (1) dazu ausgebildet ist, ein Verbindungsmittel (B) eines Fahrzeugsitzrahmens mit dem Profil (2) aufzunehmen.

7. Verfahren nach Anspruch 6, ferner umfassend einen Schritt d) des Befestigens des Verbindungsmittels (B) eines Fahrzeugsitzrahmens an dem Profil (2) an dem Schnittstellenträger (1).

8. Verfahren nach Anspruch 7 in Verbindung mit Anspruch 3, allein oder in Verbindung mit Anspruch 4, wobei das Verbindungsmittel (B) im Verlauf von d) am Schnittstellenträger (1) in der Verlängerung der Außenseite (F11E) der ersten Anschlagwand (11) in Querrichtung (Y) des Profils (2) befestigt wird, und insbesondere in Anlage, insbesondere in planer Anlage, an der Außenseite (F11E) der ersten Anschlagwand (11) des Schnittstellenträgers (1).

9. Verfahren nach Anspruch 8, wobei das Verbindungsmittel (B) im Verlauf von d) an dem Schnittstellenträger (1) in der Verlängerung der Schweißnaht (5) befestigt wird, die die erste Anschlagwand (11) des Schnittstellenträgers (1) mit der Seitenwand (22) des Profils (2) in der Querrichtung (Y) des Profils (2) verbindet.

10. Verfahren nach einem der Ansprüche 6 bis 9, wobei das Mittel (B) zur Verbindung des Sitzrahmens mit dem Profil (2) eine Pleuelstange (B) ist, die um eine Achse (AB) schwenkbar am Schnittstellenträger (1) angelenkt ist.

11. Fahrzeugsitzschienenprofil (2) mit einem im Wesentlichen U-förmigen Querschnitt mit einer Querwand (21), die zwei Seitenwände (22, 23) miteinander verbindet, wobei die Seitenwände (22, 23) im Wesentlichen parallel zueinander sind und die Querwand (21) im Wesentlichen senkrecht zu den Seitenwänden (22, 23) verläuft, wobei die Querwand (21) und jede Seitenwand (22, 23) eine Innenseite (F22I) und eine Außenseite (F22E) aufweisen, wobei das Schienenprofil (2) einen Schnittstellenträger (1) umfasst, der durch Schweißen an der Außenseite (F21E, F22E) einer seiner Wände (21, 22) befestigt ist,
wobei das Profil (2) durch das Verfahren nach einem der Ansprüche 1 bis 10 erhalten werden kann.

## Claims

1. Method of fixing, by welding, an interface support (1) on a profile (2) of a vehicle seat slide rail, comprising the steps of:
a) providing an interface support (1) having at least one wall (11, 12) with an inner face (F11I, F12I), and providing a slide rail profile (2) having a substantially U-shaped cross-section with a transverse wall (21) interconnecting two side walls (22, 23), said side walls (22, 23) being substantially parallel to each other and said transverse wall (21) being substantially perpendicular to said side walls (22, 23), the transverse wall (21) and each side wall (22, 23) having an inner face (F21I, F22I) and an outer face (F21E, F22E),
b) positioning the interface support (1) with the inner face (F11I, F12I) of its at least one wall (11, 12) against the outer face (F21E, F22E) of a wall (21, 22) of the profile (2),
c) creating a welding joint (5) between the wall (11, 12) of the interface support (1) and the wall (21, 22) of the profile (2) by moving a laser beam (3), emitted from an emitting source (4), relative to the wall (21, 22) of the profile (2), while keeping the laser beam (3) in a position such that it passes successively through, and in this order from the emitting source (4): the inner face (F21I, F22I) of said wall (21, 22) of the profile (2), then the outer face (F21E, F22E) of said wall (21, 22) of the profile (2), then the inner face (F11I, F12I) of the wall (11, 12) of the interface support (1), and while remaining within the material of the wall (11, 12) of the interface support (1).

2. Method according to claim 1, wherein the thickness (E11) of the wall of the interface support (1) is greater than the thickness (E22) of the wall (22) of the profile (2).

3. Method according to claim 1 or 2, wherein the profile (2) is an upper slide rail profile, and the interface support (1) has a first stop wall (11), the inner face (F11I) of said first stop wall (11) being provided to come into contact with the outer face (F22E) of a side wall (22) of the profile (2) during step b) of the method, a welding joint (5) being created at the end of step c) between said first stop wall (11) of the interface support (1) and the side wall (22) of the profile (2).

4. Method according to claim 3, wherein the interface support (1) has a second stop wall (12), the inner face (F12I) of said second stop wall (12) being provided to come into contact with the outer face (F21E) of the transverse wall (21) of the profile during step b) of the method, a welding joint (5) being created at the end of step c) between said second stop wall (12) of the interface support (1) and the transverse wall (21) of the profile (2).

5. Method according to one of claims 1 to 4, wherein the method further comprises, following step b) and prior to step c), a step b') of positioning the laser beam (3) emitted from the emitting source (4) so that it passes successively through, and in this order from the emitting source (4): the inner face (F21I, F22I) of said wall (21, 22) of the profile (2), then the outer face (F21E, F22E) of said wall (21, 22) of the profile (2), then the inner face (F11I, F12I) of the wall (11, 12) of the interface support (1), and while remaining within the material of the wall (11) of the interface support (1).

6. Method according to one of claims 1 to 5, wherein the interface support (1) is configured to receive a connection means (B) for connecting a vehicle seat frame to the profile (2).

7. Method according to claim 6, further comprising a step d) of fixing, on the interface support (1), the connection means (B) for connecting a vehicle seat frame to the profile (2).

8. Method according to claim 7, taken in combination with claim 3, alone or in combination with claim 4, wherein said connection means (B) is fixed on the interface support (1) during d), in the extension of the outer face (F11E) of the first stop wall (11) in the transverse direction (Y) of the profile (2), and notably in abutment, in particular in planar contact, against said outer face (F11E) of the first stop wall (11) of the interface support (1).

9. Method according to claim 8, wherein said connection means (B) is fixed on the interface support (1) during d), in the extension of the welding joint (5) joining said first stop wall (11) of the interface support (1) to the side wall (22) of the profile (2) in the transverse direction (Y) of the profile (2).

10. Method according to one of claims 6 to 9, wherein the connection means (B) for connecting the seat frame to the profile (2) is a connecting rod (B), hinged to the interface support (1) so as to pivot about an axis (AB).

11. Profile (2) of a vehicle seat slide, having a substantially U-shaped cross-section with a transverse wall (21) interconnecting two side walls (22, 23), said side walls (22, 23) being substantially parallel to each other and said transverse wall (21) being substantially perpendicular to said side walls (22, 23), the transverse wall (21) and each side wall (22, 23) having an inner face (F22I) and an outer face (F22E), said slide profile (2) comprising an interface support (1) fixed by welding on the outer face (F21E, F22E) of one of its walls (21, 22),
said profile (2) being capable of being obtained by the method according to one of claims 1 to 10.
